Europäisches Patentamt

European Patent Office

Office européen des brevets

(11) Publication number: **0 261 864**
**A2**

# (12) EUROPEAN PATENT APPLICATION

(21) Application number: 87308163.2

(22) Date of filing: 16.09.87

(51) Int. Cl.⁴: **B23B 5/16**

(30) Priority: 25.09.86 GB 8623079

(43) Date of publication of application:
**30.03.88 Bulletin 88/13**

(84) Designated Contracting States:
**CH DE FR GB IT LI NL**

(71) Applicant: **RUTLAND PLASTICS LIMITED**
**Cold Overton Road**
**Oakham Rutland Leicestershire(GB)**

(72) Inventor: **Hall, Trevor James**
**17 Hollygate Close**
**Melton Mowbray Leicestershire LE13**
**1HD(GB)**

(74) Representative: **SERJEANTS**
**25, The Crescent King Street**
**Leicester, LE1 6RX(GB)**

(54) **Pipe end preparation tools.**

(57) A tool comprises a plug (10) for fitting in a pipe end. A screw (12) is threaded in the plug (10) for advancement into the pipe. An arm (14) is pivotted with respect to the screw (12) and biassed towards the outside of the pipe. A cutter disc (20) is fast on the arm (14) and provided with a peripheral slot (22) leaving an edge (24) for cutting the outside of the pipe. The slot (22) extends over only a portion of the thickness of the disc (20) nearer the end of the pipe. The tool is suitable for removing a thin layer from the outside of a plastics pipe before thermofusion.

FIG. 1

EP 0 261 864 A2

## Pipe End Preparation Tools

### Technical Field

The invention relates to pipe end preparation tools suitable for removing a thin layer from the outside of an end of a plastics pipe before thermofusion.

### Background Art

Gas and water supply pipes, for example, have adjacent lengths joined by a collar which is fused to the outsides of the pipe ends by heating through an electric resistor wire set in the collar. Dirt, oxidation and a bad fit impair the quality of the resulting weld, so a thin layer is advantageously removed from the outside of the pipe ends immediately before joining. A tool according to the invention is suitable for this purpose.

### The Invention

The invention provides a tool comprising a plug for fitting in a pipe end, a screw threaded in the plug for advancement into the pipe, an arm pivotted with respect to the screw and biassed towards the outside of the pipe, and a cutter disc fast on the arm the cutter disc being provided with a peripheral slot leaving an edge for cutting the outside of the pipe, and the slot extending over only a portion of the thickness of the disc nearer the end of the pipe.

The part of the thickness of the disc over which the slot does not extend constitutes a land which guides the cutting edge in relation to the pipe, and ensures that the outside of the pipe is cut to a uniform diameter. The disc may be provided with more than one such slot, and is advantageously provided with means for arranging each cutting edge on a line joining the centre line of the pipe to the centre of the disc. The said means may comprise a triangular, square or polygonal hole in the disc for securing to a correspondingly shaped part of the arm only in particular orientations.

The tool may be adapted to pipes of different outside diameter by varying the diameter of the cutter disc and/or the length that part of the arm which determines the distance between the cutter disc and the centre line of the pipe.

### Drawings

Figure 1 is a perspective view of a tool according to the invention;
Figure 2 is a perspective view of a cutter disc in the tool of Figure 1;
Figure 3 is a side view of the disc of Figure 2; and
Figure 4 is a front view on arrow A of the disc of Figures 2 and 3.

### Best Mode

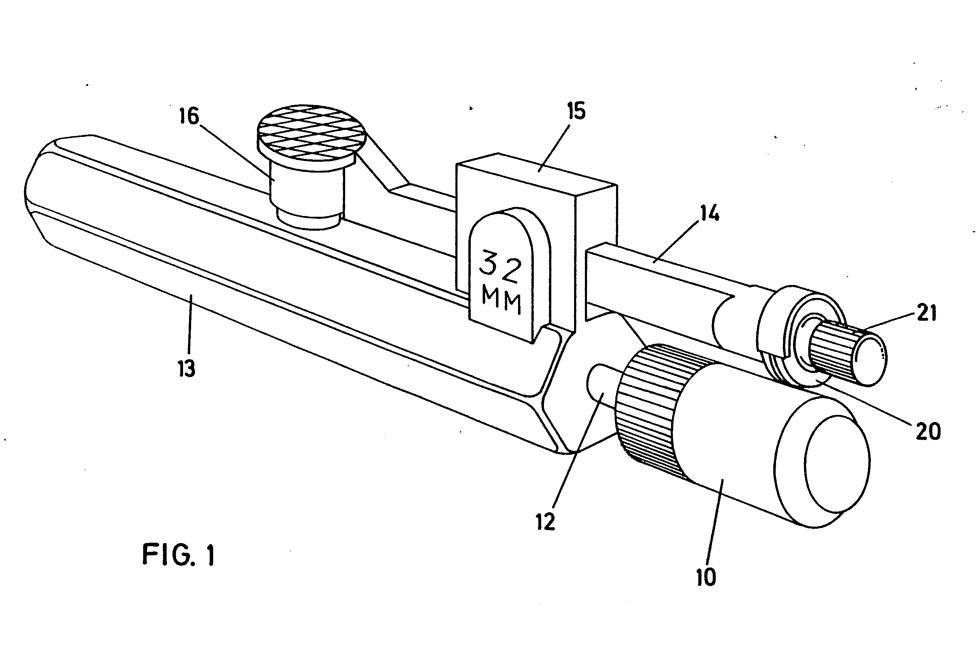

With particular reference to Figure 1, the tool comprises a plug 10 for fitting in an end of a pipe (not shown). A screw 12, of which a shank only is visible, is threaded in the plug 10, and can be advanced into the pipe by rotation through a hand grip 13 integral therewith. An arm 14 is pivotally mounted at 15 with respect to the hand grip 13, and biassed by a spring at 16 away from the grip 13 so that a cutter disc 20 at its distal end is biassed towards the outside of the pipe.

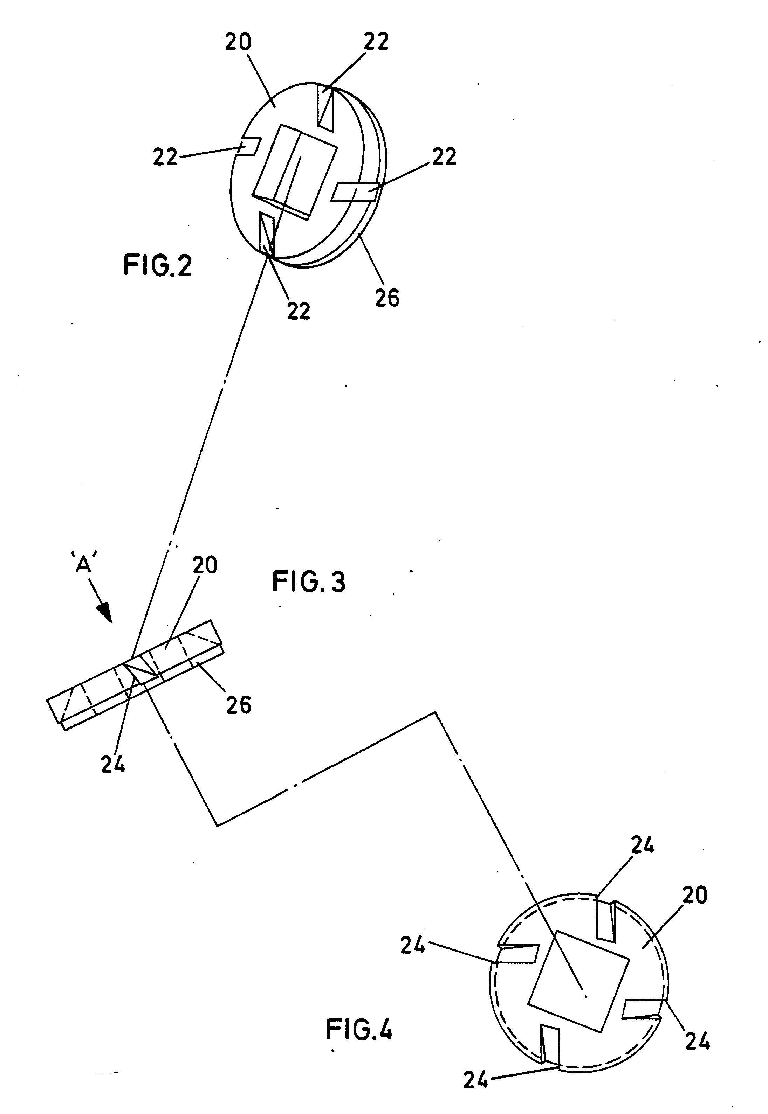

The cutter disc 20 is held fast on a distal end of the arm 14 by means of a lock nut 20 threaded thereon. As shown in Figures 2 to 4, the cutter disc has a square central hole through which it can be secured to a correspondingly shaped part of the arm 14 in any one of four orientations. This enables each of the four equi-shaped peripheral slots 22 to be arranged with its cutting edge 24 on a line joining the centre line of the pipe to the centre line of the disc 20. In this position, the cutting edge 24 can be made to cut the outside of the pipe along a helical path as the screw 12 is advanced into the plug 10.

The slots 22 extend over only a portion of the thickness of the disc 20 at an edge which in operation is nearer the end of the pipe. The part of the thickness of the disc 20 over which the slots 22 do not extend constitutes a land 26 which guides the cutting edges 24 in relation to the pipe, and ensures that the outside of the pipe is cut to a uniform diameter. As can be seen in Figurs 2 and 4 particularly, each slot is inclined not only to a radius of the disc 20 so as to provide clearance and create the cutting edge 24 but also to the axis of the cutter itself, or arm 14, so that the cutting edge 24 attacks the pipe at an angle. By this arrangement, the plastics material of the pipe can be cut off in the form of a spiral of swarf, and yet the amount of material actually removed can be small enough not to affect the outside diameter tolerance of the pipe.

## Claims

1. A pipe end preparation tool characterised by a plug (10) for fitting in a pipe end, a screw (12) threaded in the plug (10) for advancement into the pipe, an arm (14) pivotted with respect to the screw (12) and biassed towards the outside of the pipe, and a cutter disc (20) fast on the arm (14), the cutter disc (20) being provided with a peripheral slot (22) leaving an edge (24) for cutting the outside of the pipe, and the slot (22) extending over only a portion of the thickness of the disc (20) nearer the end of the pipe.

2. A tool according to claim 1 characterised in that the disc (20) is provided with more than one slot (22).

3. A tool according to claim 1 or claim 2 characterised in that the disc (20) is provided with means for arranging each cutting edge (24) on a line joining the centre line of the pipe to the centre of the disc (20).

4. A tool according to claim 3 in which the means comprises a triangular, square or polygonal hole in the disc (20) for securing to a correspondingly shaped part of the arm (14) only in particular orientations.

32 MM

FIG. 1

FIG.2

FIG.3

'A'

FIG.4